# EUROPÄISCHE PATENTANMELDUNG

(11) **EP 0 980 988 A1**
(43) Veröffentlichungstag der Anmeldung: **23.02.2000**
(21) Anmeldenummer: 99113541.9
(22) Anmeldetag: 06.07.1999
(51) Int. Cl.: F16D 55/22

(54) **Anordnung für biegebeanspruchte Bauteile, insbesondere für einen Bremssattel einer Scheibenbremse, sowie Bremssattel einer Scheibenbremse**

(30) Priorität: 20.08.1998 DE 19837781
(71) Anmelder: Volkswagen Aktiengesellschaft, 38436 Wolfsburg (DE)
(72) Erfinder: Ortiz, Sergio, 38102 Braunschweig (DE)

(57) **Zusammenfassung**

Seriengemäße Bremssättel (1) für Faustsattelbremsen werden derzeit aus Sphäroguß hergestellt. Dieser ist sehr schwer. Zur Erlangung einer gewissen Gewichtsreduzierung ist es ferner bereits bekannt, Bremssättel (1) aus keramikfaserverstärktem Aluminium herzustellen. Der Elastizitätsmodul dieses Werkstoffs liegt aber nur um etwa 25% über demjenigen von herkömmlichen, hochfesten Aluminiumlegierungen. Außerdem ist das keramikfaserverstärkte Aluminium sehr spröde. Erfindungsgemäß wird vorgeschlagen, den biegebeanspruchten Bereich von Bremssätteln (1) einer Faustsattelbremse, aber auch von anderen biegebeanspruchten Bauteilen, aus einem Grundkörper (3) aus Metall herzustellen, der mit einer Versteifung (8) aus Faserverbundwerkstoff versehen ist.

## Beschreibung

Die Erfindung betrifft eine Anordnung für biegebeanspruchte Bauteile, insbesondere für einen Bremssattel einer Faustsattelbremse, mit einem Grundkörper aus Metall. Weiterhin betrifft die Erfindung einen Bremssattel einer Faustsattelbremse.

Die Erfindung befaßt sich vor allem mit der Optimierung des biegebeanspruchten Bereichs eines Bremssattels für eine Faustsattelbremse. Die Erfindung ist aber auch ganz allgemein für alle vornehmlich auf Biegung beanspruchten Bauteile anwendbar.

Bei Faustsattelbremsen liegt eine Funktionstrennung vor, bei der die aus dem Bremsvorgang resultierenden Bremskräfte durch den Bremsträger abgeleitet werden, während die axiale Klemmung der Bremsbeläge gegen die Bremsscheibe ausschließlich von dem im Fachjargon Faust genannten Bereich des Bremssattels übernommen wird. Die Faust wird dabei nahezu ausschließlich auf Biegung beansprucht. Dieser Bereich muß daher eine hohe Festigkeit und Steifigkeit aufweisen. Übliche, derzeit in der Serie eingesetzte Faustsättel werden aus Sphäroguß hergestellt. Der Bremssattel wird hierdurch relativ schwer. Gleichzeitig ist der Bremssattel aber auch eine ungefederte bzw. nur durch die Elastizität des Reifens, welche bei modernen Niederquerschnittsreifen äußerst gering ist, gefederte Masse. Als solche beeinträchtigt sie den Fahrkomfort erheblich.

Um hier eine Gewichtsreduzierung zu erreichen, ist als erster Ansatz durch die DE 44 30 957 A1 der Einsatz von keramikfaserverstärktem Aluminium (sogenanntem Metal Matrix Compound, MMC) für Faustsättel vorgeschlagen worden. Hierbei werden die durch die Keramik-Faserverstärkung erreichbaren besseren mechanischen Eigenschaften ausgenutzt. Der Elastizitätsmodul einer solchen keramikfaserverstärkten Aluminiumkonstruktion liegt um durchschnittlich 26 % über demjenigen von herkömmlichen hochlegierten Aluminiumlegierungen. Außerdem besitzt dieser Werkstoff eine sehr geringe Bruchdehnung und ist somit sehr spröde.

Hiervon ausgehend liegt der Erfindung das Problem zugrunde, eine Anordnung für biegebeanspruchte Bauteile, insbesondere Bremssättel, zu schaffen, die bei geringstmöglichem Gewicht verbesserte mechanische Eigenschaften aufweist.

Zur Lösung dieses Problems ist die erfindungsgemäße Anordnung dadurch gekennzeichnet, daß der Grundkörper durch einen Faserverbundwerkstoff versteift ist.

Durch die erfindungsgemäße Anordnung ist es möglich, gewöhnliche hochteste Legierungen, beispielsweise Aluminiumlegierungen, für den Grundkörper zu verwenden, die lediglich mit dem Faserverbundwerkstoff versteift sind. Die Anordnung weist bei verbesserter Steifigkeit ein um teilweise mehr als 30% geringeres Gewicht auf als die keramikfaserverstärkte Aluminiumkonstruktion und mehr als 60% gegenüber der Sphärogußkonstruktion. Ferner ist gegenüber dieser Konstruktion die erfindungsgemäße Anordnung aufgrund höherer Bruchdehnung hinsichtlich ihres Versagens deutlich gutmütiger. Aluminium hat gegenüber Sphäroguß ein wesentlich geringeres spezifisches Gewicht, aber eine um ca. 2/3 niederigere Steifigkeit. Der Nachteil der geringeren Steifigkeit wird jedoch durch die Versteifung aus dem Faserverbundwerkstoff vollständig ausgeglichen und kann je nach konkreter Ausgestaltung der Versteifung noch übertroffen werden.

Als Faserverbundwerkstoff wird vorzugsweise ein kohlefaserverstärkter Verbundwerkstoff verwendet. Besonders günstig ist es, wenn die Faserausrichtung im Faserverbundwerkstoff in Kraftflußrichtung der Biegebeanspruchung ausgerichtet ist. Bei Faustsätteln sind die Kohlefasern demnach in einer zur Längsmittelebene des Faustsattels parallelen Ebene in Richtung der Axialrichtung eines Kolbens der Faustsattelbremse ausgerichtet. Hierdurch ergibt sich eine optimale Biegesteifigkeit.

Nach einer herstellungstechnisch besonders günstigen Ausgestaltung der Erfindung ist der Faserverbundwerkstoff auf der Zug- und/oder der Druckseite des biegebeanspruchten Bauteils aufgeklebt. Es kann somit auch ein herkömmlicher Grundkörper aus Metall verwendet werden, der zusätzlich mit der Versteifung aus dem Faserverbundwerkstoff versehen wird. Der Faserverbundwerkstoff wird dabei vorzugsweise mittels eines temperaturfesten Epoxyd-Klebers auf Silikonbasis aufgeklebt. Der Kleber wirkt sich zusätzlich dämpfend auf die Konstruktion aus, so daß ein verbessertes akustisches Verhalten der Konstruktion gegeben ist. Die Oberfläche des Grundkörpers kann vor dem Aufkleben des Faserverbundwerkstoffs eloxiert werden.

Nach einer weiteren konstruktiven Ausgestaltung der Erfindung ist der Grundkörper zusätzlich mit Entlastungskerben versehen. Hierdurch ergibt sich eine weitere Versteifung der Konstruktion.

Ein erfindungsgemäßer Bremssattel einer Faustsattelbremse weist zur Lösung des der Erfindung zugrundeliegenden Problems in seinem biegebeanspruchten Bereich, nämlich im Bereich der Faust, die erfindungsgemäße Anordnung auf.

Die Erfindung wird nachfolgend anhand eines in der Zeichnung dargestellten Ausführungsbeispiels eines Bremssattels für eine Faustsattelbremse näher erläutert. In dieser zeigt:

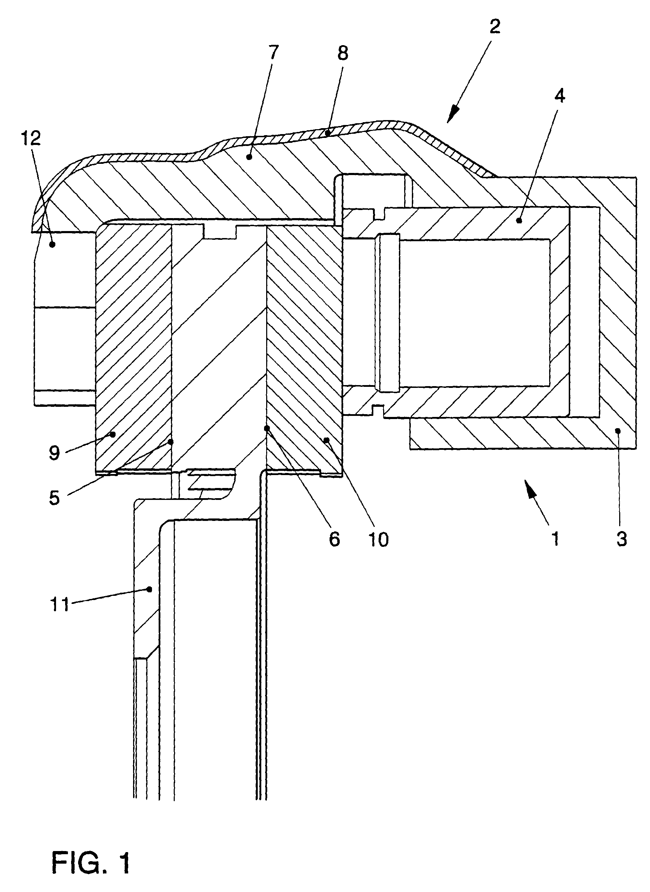

- Fig. 1: einen Bremssattel mit den Erfindungsmerkmalen in Seitenansicht, teilweise geschnitten.

In Fig. 1 ist ein Bremssattel 1 für eine Faustsattelbremse gezeigt. Die eigentliche Faust 2, wie sie im Fachjargon genannt wird, ist geschnitten dargestellt. Die Faust 2 weist einen Grundkörper 3 aus Metall auf. Der Grundkörper 3 ist vorzugsweise aus einem Leichtmetall, konkret aus einem hochfesten Aluminium, hergestellt.

Die Faust 2 ist mit ihrem Grundkörper 3 mit einer Betätigungseinrichtung 4 für die Faustsattelbremse verbunden. Diese Verbindung kann einstückig oder lösbar sein. Mittels der Betätigungseinrichtung 4 wird die Bremse hydraulisch oder elektromechanisch betätigt. Bremsbeläge 9 und 10 sind zum Eingriff in eine Bremsscheibe 11 vorgesehen und klemmen diese in bekannter Weise in Bremsflächen 5 und 6, wobei der in Axialrichtung schwimmend gelagerte Bremssattel 1 bei einer Betätigung der Betätigungseinrichtung 4 und somit einer Bremskraft des Bremsbelags 10 auf die Bremsscheibe 11 entsprechend in Gegenrichtung nachgeben kann und somit den Bremsbelag 9 gegen die Bremsscheibe 11 drückt.

Aus den vorgenannten Ausführungen ist ersichtlich, daß die Faust 2, insbesondere ein Quersteg 7 derselben, fast ausschließlich auf Biegung beansprucht ist. Dieser Bereich ist auf seiner Außenseite mit einer Verstärkung aus einem Faserverbundwerkstoff verstärkt. Diese Außenseite bildet im vorliegenden Beispiel die Druckseite der Biegebeanspruchung. Weiterhin kann sich die Verstärkung 8 auch auf einen hintereren Gehäusebereich 12, der als Abstützung für den Bremsbelag 9 dient, erstrecken, wenn dieser Gehäusebereich stärker auf Biegung belastet wird.

Der Faserverbundwerkstoff ist im vorliegenden Fall ein kohlefaserverstärkter Verbundwerkstoff. Die einzelnen Kohlefasern sind in Kraftflußrichtung der Biegebeanspruchung orientiert. Die Kohlefasern verlaufen somit in zur Längsmittelebene des Bremssattels 1, die im vorliegenden Fall auch die Schnittebene der Faust 2 ist, parallelen Ebenen einerseits und parallel zur Oberfläche des Grundkörpers 3.

Die Verstärkung 8 ist durch Klebung mit dem Grundkörper 3 verbunden. Hierfür wird ein auf Silikonbasis hergestellter Epoxyd-Kleber verwendet. Vor dem Verkleben wird der Grundkörper 3 eloxiert.

### BEZUGSZEICHENLISTE

- 1: Bremssattel
- 2: Faust
- 3: Grundkörper
- 4: Betätigungseinrichtung
- 5: Bremsfläche
- 6: Bremsfläche
- 7: Quersteg
- 8: Verstärkung
- 9: Bremsbelag
- 10: Bremsbelag
- 11: Bremsscheibe
- 12: Gehäusebereich

## Patentansprüche

1. Anordnung für biegebeanspruchte Bauteile, insbesondere für einen Bremssattel (1) einer Faustsattelbremse, mit einem Grundkörper (3) aus Metall, **dadurch gekennzeichnet**, daß der Grundkörper (3) durch einen Faserverbundwerkstoff (8) versteift ist.

2. Anordnung nach Anspruch 1, dadurch gekennzeichnet, daß der Faserverbundwerkstoff (8) kohlefaserverstärkt ist.

3. Anordnung nach Anspruch 1 oder 2, dadurch gekennzeichnet, daß der Faserverbundwerkstoff (8) eine Faserausrichtung in Kraftflußrichtung der Biegebeanspruchung aufweist.

4. Anordnung nach einem der Ansprüche 1 bis 3, dadurch gekennzeichnet, daß der Faserverbundwerkstoff (8) auf der Zug- und/oder der Druckseite des biegebeanspruchten Bauteils aufgeklebt ist.

5. Anordnung nach Anspruch 4, dadurch gekennzeichnet, daß der Faserverbundwerkstoff (8) mittels einem temperaturfesten Epoxydkleber auf Silikonbasis aufgeklebt ist.

6. Anordnung nach Anspruch 4 oder 5, dadurch gekennzeichnet, daß die Oberfläche des Grundkörpers (3) vor dem Aufkleben des Faserverbundwerkstoffs (8) eloxiert ist.

7. Anordnung nach einem der Ansprüche 1 bis 6, dadurch gekennzeichnet, daß der Grundkörper (3) zusätzlich mit Entlastungskerben versehen ist.

8. Bremssattel einer Faustsattelbremse für insbesondere Kraftfahrzeuge, dadurch gekennzeichnet, daß ein biegebeanspruchter Bereich eine Anordnung nach einem der Ansprüche 1 bis 7 aufweist.
